# EUROPEAN PATENT APPLICATION

(11) **EP 2 578 394 A2**
(43) Date of publication of application: **10.04.2013**
(21) Application number: 11792642.8
(22) Date of filing: 03.06.2011
(51) Int. Cl.: B32B 27/12, B32B 27/04, B32B 17/10, D06N 7/00

(54) **PLA FLOORING MATERIAL HAVING FABRIC SURFACE**

(30) Priority: 07.06.2010 KR 20100053404
(71) Applicant: LG Hausys, Ltd., Seoul 150-721 (KR)
(72) Inventor: HA, Kyung-Tae, Ulsan 680-012 (KR); KWON, Hyun-Jong, Ulsan 680-012 (KR); SUNG, Jae-Wan, Ulsan 680-012 (KR); PARK, Sung-Ha, Ulsan 680-012 (KR)
(74) Representative: Zacco Denmark A/S
(86) International application number: PCT/KR2011/004094
(87) International publication number: WO 2011/155731

(57) **Abstract**

The present invention relates to a PLA flooring material having a fabric surface. The flooring material includes fabrics of a PLA material on the surface thereof, thereby achieving a fabric texture which cannot be obtained by printing in the art, environmental burden in disposal of petroleum resin products, and realizing an environmentally friendly flooring material through application of a PLA resin to a fabric layer, a rear layer and the like of the flooring material. The flooring material further includes a dimension stabilizing layer to improve dimensional stability.

## Description

### [Technical Field]

The present invention relates to a PLA (polylactic acid) flooring material having a fabric surface, and more particularly, to a flooring material, which includes a fabric surface of a PLA material, thereby realizing a fabric texture that cannot be obtained by a conventional printing method, reducing environmental burden in disposal of petroleum resin products, and realizing eco-friendliness through application of a PLA resin to a fabric layer, a rear layer and the like of the flooring material, and which further includes a dimension stabilizing layer to improve dimensional stability.

### [Background Art]

Flooring materials based on petroleum resins such as polyvinyl chloride (PVC) have mainly been used for buildings such as houses, apartments, offices, stores, and the like.

A polyvinyl chloride flooring material is manufactured through extrusion or calendering of resins, such as polyvinyl chloride. However, since polyvinyl chloride is based on petroleum-based raw materials, there can be a severe problem in supply of the raw materials due to exhaustion of petroleum resources.

In addition, since polyvinyl chloride flooring materials generate large amounts of toxic substances in use or disposal, it is necessary to suppress the use thereof as much as possible in terms of environmentally friendliness.

Therefore, in recent years, flooring materials based on environmentally friendly resins have increasingly attracted attention instead of polyvinyl chloride based flooring materials.

### [Disclosure]

### [Technical Problem]

An aspect of the present invention is to provide a PLA flooring material having a fabric surface, in which fabrics are applied to the surface thereof in constituting a fabric-combined flooring material using a PLA resin, thereby realizing a fabric texture which cannot be obtained through printing in the art.

Another aspect of the present invention is to provide a PLA flooring material having a fabric surface, which employs a PLA resin to form a protective layer, a fabric layer, an upper layer, and a rear layer, thereby securing dimensional stability of the fabric-combined PLA resin flooring material while realizing eco-friendliness, and which allows supplementation by a glass fiber-impregnated layer.

### [Technical Solution]

In accordance with one aspect of the present invention, a PLA flooring material having a fabric surface includes: a fabric formed of at least one of a first fiber including a polylactic acid (PLA) resin, and a second fiber having a core shell structure obtained by coating non-PLA fiber with a PLA resin.

The non-PLA fiber includes at least one selected from natural fiber, synthetic fiber, and a combination thereof, and the natural fiber may include at least one selected from among cotton, silk, hemp, and jute.

The synthetic resin may include at least one selected from among polyvinyl chloride (PVC), polyethylene (PE), polypropylene (PP), nylon, and polyester.

In a first embodiment of the present invention, the PLA flooring material may include: a fabric layer and a rear layer formed under the fabric layer, and at least one of the fabric layer and the rear layer may include a PLA resin.

In a second embodiment of the present invention, the PLA flooring material includes: a fabric layer; a dimension stabilizing layer formed under the fabric layer; and a rear layer formed under the dimension stabilizing layer, and at least one of the fabric layer and the rear layer may include a PLA resin.

In a third embodiment of the present invention, the PLA flooring material includes: a fabric layer; an upper layer formed under the fabric layer; a dimension stabilizing layer formed under the upper layer; and a rear layer formed under the dimension stabilizing layer, and at least one of the fabric layer, the upper layer, and the rear layer may include a PLA resin.

In a fourth embodiment of the present invention, the PLA flooring material includes: a protective layer; a fabric layer formed under the protective layer; an upper layer formed under the fabric layer; a dimension stabilizing layer formed under the upper layer; and a rear layer formed under the dimension stabilizing layer, and at least one of the protective layer, the fabric layer, the upper layer, and the rear layer may include a PLA resin.

In a fifth embodiment of the present invention, the PLA flooring material includes: a fabric layer; an upper layer formed under the fabric layer; a dimension stabilizing layer formed under the upper layer; and a rear layer formed under the dimension stabilizing layer, and the fabric layer may include a PLA resin.

In a sixth embodiment of the present invention, the PLA flooring material includes: a fabric layer; an upper layer formed under the fabric layer; a dimension stabilizing layer formed under the upper layer; a rear layer formed under the dimension stabilizing layer; and a rear fiber layer formed under the rear layer, and the fabric layer may include a PLA resin.

In a seventh embodiment of the present invention, the PLA flooring material includes: a fabric layer; an upper layer formed under the fabric layer; a dimension stabilizing layer formed under the upper layer; and a rear layer formed of a combination of a non-foamed layer, a foamed layer and a non-foamed layer sequentially stacked under the dimension stabilizing layer. The fabric layer may include a PLA resin.

In an eighth embodiment of the present invention, the PLA flooring material includes: a fabric layer; an upper layer formed under the fabric layer; a dimension stabilizing layer formed under the upper layer; a rear layer formed of a combination of a non-foamed layer, a foamed layer and a non-foamed layer sequentially stacked under the dimension stabilizing layer; and a rear fiber layer formed under the rear layer. The fabric layer may include a PLA resin.

In a ninth embodiment of the present invention, the PLA flooring material includes: a fabric layer; and a rear layer formed of a combination of a non-foamed layer, a foamed layer and a non-foamed layer sequentially stacked under the fabric layer. The fabric layer may include a PLA resin.

In a tenth embodiment of the present invention, the PLA flooring material includes: a fabric layer; a rear layer formed of a combination of a non-foamed layer, a foamed layer and a non-foamed layer sequentially stacked under the fabric layer; and a rear fiber layer formed under the rear layer. The fabric layer may include a PLA resin.

### [Advantageous Effects]

According to the prevent invention, in constituting a PLA flooring material having a fabric surface, fabrics and a rear layer are formed of a plant based PLA resin to show an effect of reducing emission of environmentally harmful substances such as CO₂ in use or disposal of the PLA flooring material.

In addition, according to the present invention, with a dimension stabilizing layer such as a glass fiber-impregnated layer, the PLA flooring material may minimize dimensional change according to temperature variation of a PLA resin.

Further, according to the present invention, the PLA flooring material may provide improved outer appearance through fabrics and also provide natural texture through a rear fiber layer comprised of jute and the like.

Furthermore, according to the present invention, since a PLA resin can be subjected to melt extrusion and calendering or pressing using an acrylic polymer as a melt strength enhancer, it is possible to improve yield.

### [Description of Drawings]

Fig. 1 is a perspective view of PLA fabric according to one exemplary embodiment of the present invention.
Fig. 2 is a side sectional view of the fabric according to the exemplary embodiment of the present invention.
Figs. 3 to 13 are sectional views of PLA flooring materials each having a fabric surface according to exemplary embodiments of the present invention.

### [Best Mode]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are provided to provide complete disclosure of the invention and a thorough understanding of the invention to those skilled in the art. The scope of the invention is defined only by the claims. Like components will be denoted by like reference numerals throughout the specification.

Hereinafter, a PLA flooring material having a fabric surface according to the present invention will be described in detail with reference to the accompanying drawings.

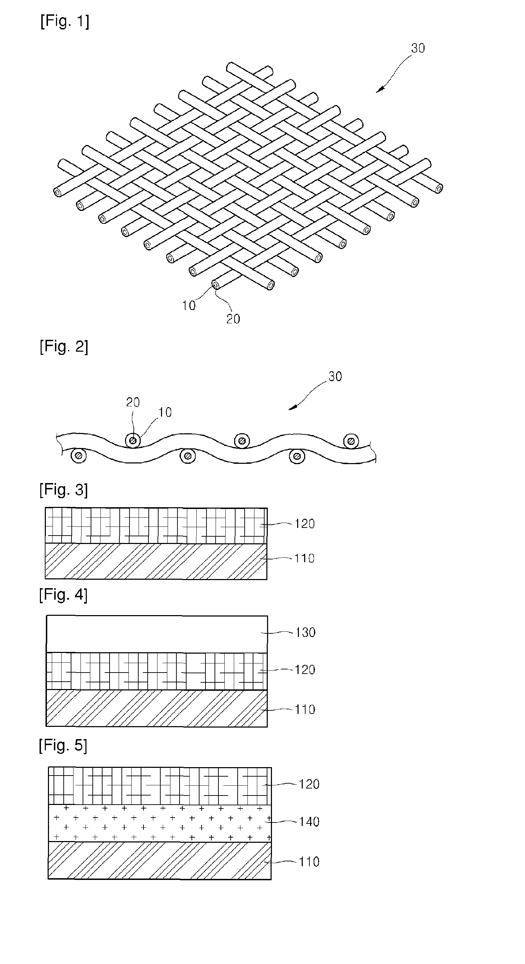

Fig. 1 is a perspective view of PLA fabric according to one exemplary embodiment of the present invention.

Referring to Fig. 1, a PLA flooring material including woven fabric 30 comprised of at least one fiber having a core shell structure wherein a polylactic acid (PLA) resin 20 is coated on another fiber 10.

The fiber of the core shell structure may include a PLA fiber comprised only of a PLA resin. That is, when the PLA fiber is referred to as a first fiber, the fiber of the core shell structure may be a second fiber comprised of a non-PLA fiber, and the fabric 30 is formed of at least one of the first fiber and the second fiber.

Thus, the other fiber 10 may include natural fiber or synthetic fiber except for the PLA fiber.

Here, the natural fiber may be fiber including at least one of cotton, silk, hemp and jute, and the synthetic fiber may be fiber including at least one of polyvinyl chloride (PVC), polyethylene (PE), polypropylene (PP), nylon (including Nylon 6 and Nylon 66) and polyester.

It can be seen that both upper and lower surfaces of the fabric structure woven with the fibers are formed of a PLA resin, and a detailed structure thereof will be described hereinafter.

Fig. 2 is a side sectional view of the fabric according to the exemplary embodiment of the present invention.

Referring to Fig. 2, the entire surface of the fabric 30 is exposed through the PLA resin 20.

Here, the PLA resin according to the present invention is a thermoplastic polyester such as a lactide or lactic acid, and may be manufactured by polymerizing lactic acid obtained by fermenting starch extracted from plant sources such as corns or potatoes.

The amount of environmentally harmful substances, such as CO₂, which are emitted from the PLA resin in use or disposal of the PLA resin, is significantly small as compared with a petroleum based material such as polyvinyl chloride (PVC), and the PLA resin has eco-friendly characteristics to enable ready biodegradation.

Further, the PLA resin may be classified into a crystalline PLA (c-PLA) resin and an amorphous PLA (a-PLA) resin. Here, since the crystalline PLA resin can suffer from a bleeding phenomenon where a plasticizer flows out of a sheet surface, the amorphous PLA resin is preferred.

In addition, when the amorphous PLA resin is used according to one embodiment of the present invention, a compatibilizer which has been essential to prevent the bleeding phenomenon may be omitted.

Moreover, when the amorphous PLA resin is used, it is most desirable that the PLA resin be composed of 100% of the amorphous PLA resin. Of course, a PLA resin composed of both the crystalline PLA resin and the amorphous PLA resin may also be used as needed. Exemplary embodiments thereof will be described in detail hereinafter.

Figs. 3 to 12 are sectional views of PLA flooring materials each having a fabric surface according to exemplary embodiments of the present invention.

First, the PLA flooring material having a fabric surface according to the present invention has the basic structure as shown in Fig. 3.

Referring to Fig. 3, the basic structure of the PLA flooring material according to one exemplary embodiment includes a rear layer 110 and a fabric layer 120.

Here, it should be understood that although upper and lower portions are referred to with reference to vertical sequence in the following description, such terms are provided only for convenience of description and the present invention is not limited thereto.

For example, a structure wherein the rear layer 110 is placed on the fabric layer 120 is the same as this embodiment, and this reference will be applied to all of other exemplary embodiments in the same way.

In addition, a more detailed feature of the present invention is in that at least one of the fabric layer 120 and the rear layer 110 may include a PLA resin.

Further, the PLA resin for forming the fabric layer 120 or the rear layer 110 may further contain an acrylic copolymer as a non-phthalate plasticizer and a melt strength enhancer.

The environmentally friendly plasticizer softens the PLA resin to improve thermoplasticity and thus serves to facilitate forming at high temperature. The plasticizer may be acetyl tributyl citrate.

The non-phthalate plasticizer may be present in an amount of 0 to 60 parts based on 100 parts by weight of the PLA resin in the fabric layer 120, and may be present in an amount of 5 to 60 parts by weight based on 100 parts by weight of the PLA resin in the rear layer 110.

If the non-phthalate plasticizer is present in a smaller amount based on based on 100 parts by weight in each layer, hardness of the PLA resin can increase, thereby causing deterioration in seating properties of the flooring material, whereas if the amount of the non-phthalate plasticizer exceeds 60 parts by weight based on 100 parts by weight of the PLA resin in each layer, the flooring material has low physical properties such as processibility due to decrease in compatibility with other materials forming the respective layers.

The acrylic copolymer is used as a melt strength enhancer. The PLA resin itself has low melt strength and heat resistance, and the acrylic copolymer suppresses such disadvantages to enhance melt strength, thereby enabling calendering and pressing.

The acrylic copolymer can be usefully applied to calendering or pressing of the PLA resin in testing.

The acrylic copolymer may be present in an amount 0.1 to 20 parts by weight based on 100 parts by weight of the PLA resin in each of the fabric layer 120 and the rear layer 110.

If the amount of the acrylic copolymer is less than 0.1 parts by weight, the PLA resin cannot secure sufficient improvement of melt efficiency and melt strength. If the amount of the acrylic copolymer exceeds 20 parts by weight, manufacturing costs of the layers constituting the flooring material can increase and properties of the layers can be deteriorated due to low compatibility with other materials constituting the layers.

Although the weight average molecular weight of the acrylic copolymer is not particularly limited, the acrylic copolymer may have a weight average molecular weight ranging from 800,000 to 6,000,000 in consideration of improved melt strength and compatibility with other materials upon machining.

Further, the PLA resin may further include lubricants to prevent the resin from sticking to a calender roll or a press in a machining process such as calendering or pressing.

Among various lubricants, the present invention employs high molecular weight fatty acids, which are environmentally friendly lubricants. In particular, stearic acid corresponding to C₁₈ saturated high molecular weight fatty acid is used.

In each of the fabric layer 120 and the rear layer 110, the lubricant may be present in an amount of 0.01 to 10 parts by weight based on 100 parts by weight of the PLA resin. If the amount of the lubricant is less than 0.01 parts by weight based on 100 parts by weight of the PLA resin, the effects of the lubricant cannot be obtained, and if the amount of the lubricant exceeds 10 parts by weight based on 100 parts by weight of the PLA resin, the PLA resin can be deteriorated in impact resistance, heat resistance, and gloss.

In order to prevent the PLA resin from being deteriorated in mechanical properties such as impact resistance through hydrolysis of the PLA resin, the PLA resin may further include an anti-hydrolysis agent. Examples of the anti-hydrolysis agent may include carbodiimide and oxazoline. However, the present invention is not limited thereto, and any typical anti-hydrolysis agent may be used.

The anti-hydrolysis agent may be present in an amount of 10 parts by weight or less based on 100 parts by weight of the PLA resin in each of the fabric layer 120 and the rear layer 110. When the amount of the anti-hydrolysis agent exceeds 10 parts by weight based on 100 parts by weight of the PLA resin, forming processibility can be lowered.

Further, when applied to the fabric layer 120 or the rear layer 110, the PLA resin may further include calcium carbonate (CaCO₃) as a reinforcing inorganic filler, or titanium dioxide (TiO₂) as a white pigment and other color pigments for providing an aesthetically pleasing appearance.

For calcium carbonate, the fabric layer 120 may contain 500 parts by weight or less of calcium carbonate based on 100 parts by weight of the PLA resin, and the rear layer 110 may contain 1000 parts by weight or less of calcium carbonate based on 100 parts by weight of the PLA resin. Further, for titanium dioxide and pigments, the fabric layer 120 may contain 50 parts by weight or less of titanium dioxide and the pigments based on 100 parts by weight of the PLA resin, and the rear layer 110 may contain 50 parts by weight or less of titanium dioxide and the pigments based on 100 parts by weight of the PLA resin. When the amounts of calcium carbonate and titanium dioxide exceed these ranges, bonding force of other components can be lowered, thereby deteriorating processibility.

In the present invention, the rear layer 110 is the most basic layer of the flooring material, and serves to support the fabric layer 120 at an upper side of the flooring material and absorb impact exerted upon the upper or lower side thereof. The rear layer 110 may be in the form of a foamed layer or a non-foamed layer and may have a monolayer or multilayer structure.

The rear layer 110 may further include at least one of 100 parts by weight of the PLA resin, 5 to 60 parts by weight of the non-phthalate plasticizer, 0.1 to 20 parts by weight of the acrylic copolymer as a melt strength enhancer, 0.01 to 10 parts by weight of a lubricant, 10 parts by weight or less of the anti-hydrolysis agent, 1000 parts by weight or less of calcium carbonate (CaCO₃), and 50 parts by weight or less of titanium dioxide (TiO₂).

The rear layer 110 may have a thickness ranging from 0.2 mm to 5.0 mm.

If the thickness of the rear layer 110 is less than 0.2 mm, it is difficult to form the rear layer 110, and if the thickness of the rear layer 110 exceeds 5.0 mm, manufacturing costs can increase.

The fabric layer 120 may employ both a natural material and a synthetic resin. When the synthetic resin is used, a biodegradable resin may be preferred to reduce environmental burden in disposal of the biodegradable resin. In particular, a PLA resin may be used in terms of machining efficiency and physical properties.

Examples of the natural material include cotton, silk, and jute, without being limited thereto. Generally, such natural material can be easily contaminated and has difficulty removing contaminants. Thus, when such natural material is used, a natural material impregnated with a resin may be used.

Fabrics of the synthetic resin may be fabricated by weaving with synthetic resin threads or synthetic resin-coated threads.

A general weaving machine or a Jacquard weaving machine may be used to fabricate the fabrics.

In order to provide various outer appearances to the fabrics, two or more kinds of threads having different colors may be used, and a pattern may be provided to the surface of the fabrics through dyeing or printing as needed.

The threads of the fabrics may have a thickness ranging from 0.1 mm to 5.0 mm. If the thickness of the threads is less than 0.1 mm, the threads can be easily worn out, thereby providing low durability, and if the thickness of the threads is greater than 5.0 mm, there can be a problem of increase in manufacturing cost without significantly increasing physical properties.

Further, the weaving method may be selected from plain weave and twill weave, as needed.

In this way, the fabric layer 120 serves to provide a natural texture according to feeling and a weaving form of the fabrics themselves.

Next, in an exemplary embodiment shown in Fig. 4, the flooring material further includes a surface treatment layer 130 on an upper surface of the fabric layer 120 in the basic structure as described above. Here, the flooring material may further include a protective layer (not shown) under the surface treatment layer 130. The protective layer may be used to prevent damage to the fabric layer when the surface treatment layer is formed.

The surface treatment layer 130 is formed on the fabric layer 120 to improve surface quality of the flooring material, such as scratch resistance and wear resistance while improving anti-contamination to facilitate cleaning of the fabric layer 120. The surface treatment layer 130 may include polyurethane, urethane acrylate, and wax.

The surface treatment layer 130 may be formed in various ways. For example, a UV-curable urethane acrylate composition may be coated on the fabric layer 120 and cured by UV radiation.

Further, thermosetting wax may be coated on the fabric layer 120 and cured in an oven.

The surface treatment layer 130 may have a thickness of 0.01 mm to 0.1 mm. If the thickness of the surface treatment layer 130 is less than 0.01 mm, it is difficult to improve physical properties such as scratch resistance, and if the thickness of the surface treatment layer exceeds 0.1 mm, excessive manufacturing costs are required to form the surface treatment layer, and an outer appearance of the flooring material can be lowered.

Next, in an exemplary embodiment shown in Fig. 5, the flooring material further includes a dimension stabilizing layer 140 between the rear layer 110 and the fabric layer 120 in the structure of Fig. 3.

The dimension stabilizing layer 140 serves to enhance dimensional stability of a sheet using the PLA resin, and may be formed by impregnating glass fiber (G/F) in at least one of an acryl resin, a melamine resin, and a PLA resin, which exhibit good formability.

The flooring material using the PLA resin can undergo dimensional variation due to temperature change by heating, such that a connecting part between the flooring materials can be widened due to contraction. The dimension stabilizing layer 140 prevents such a phenomenon by securing dimensional stability.

Here, the glass fiber may have a mass per unit area of 30 to 150 g/m². If the mass per unit area of the glass fiber is less than 30 g/m², insufficient dimension stability can be obtained, and if the mass per unit area of the glass fiber exceeds 150 g/m², adhesion between the fabric layer 120 and the dimension stabilizing layer 140 or between the dimension stabilizing layer 140 and the rear layer 110 can be lowered.

The dimension stabilizing layer 140 may further include at least one selected from the group consisting of a non-phthalate plasticizer such as ATBC, a viscosity depressant, calcium carbonate as inorganic fillers for cost reduction, and titanium dioxide (TiO₂) as a white pigment, and a combination thereof according to the purpose or shape thereof.

In addition, the dimension stabilizing layer 140 may include 40 to 150 parts by weight of the plasticizer, 30 parts by weight or less of the viscosity depressant, 150 parts by weight or less of calcium carbonate, and 20 parts by weight or less of titanium dioxide, based on 100 parts by weight of the acrylic resin.

If the dimension stabilizing layer 140 contains less than 40 parts by weight of the plasticizer based on 100 parts by weight of the resin, the dimension stabilizing layer can have low hardness, and if the dimension stabilizing layer 140 contains more than 150 parts by weight of the plasticizer, dimensional stability can be deteriorated due to low compatibility with other components.

If the dimension stabilizing layer 140 contains more than 30 parts by weight of the viscosity depressant based on 100 parts by weight of the acryl resin, formability can be lowered due to excessive decrease in viscosity.

If the amounts of calcium carbonate and titanium dioxide are excessive, bonding force with other components can be lowered, causing deterioration in processibility.

The dimension stabilizing layer 140 may have a thickness ranging from 0.1 mm to 1.0 mm.

In the present invention, when the thickness of the dimension stabilizing layer 140 is less than 0.1 mm, insufficient dimensional stability can be obtained, and if the thickness of the dimension stabilizing layer 140 exceeds 1.0 mm, only the thickness of the dimension stabilizing layer increases without providing dimensional stability, thereby causing increase in overall manufacturing costs.

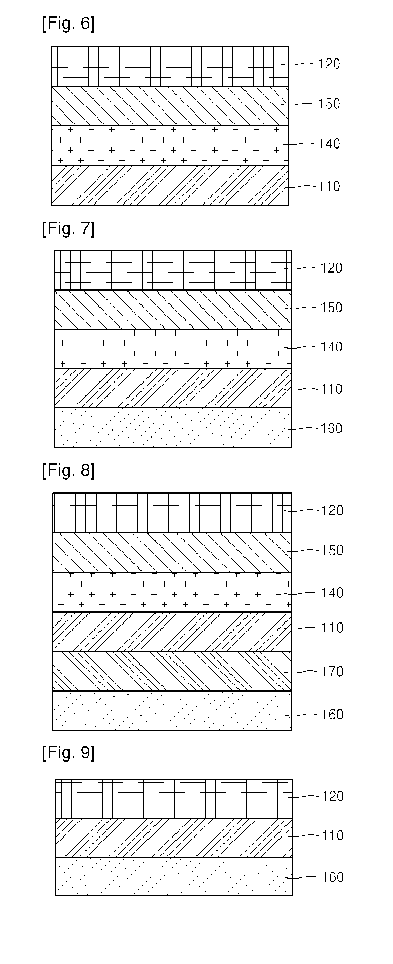

Next, in an exemplary embodiment shown in Fig. 6, the flooring material further includes an upper layer 150 between the fabric layer 120 and the dimension stabilizing layer 140 in the structure of Fig. 4.

In the exemplary embodiment shown in Fig. 6, at least one of the fabric layer 120, the rear layer 110 and the upper layer 150 is formed of a PLA resin.

Here, the upper layer 150 is formed on the dimension stabilizing layer 140 to impart elasticity to the flooring material. The upper layer 150 may be formed by stacking at least one layer in the form of a foamed layer or a non-foamed layer.

The upper layer 150 may be formed of the PLA resin and further include additives, such as a non-phthalate plasticizer and an acryl copolymer, as in the rear layer 110.

The upper layer 150 may have a thickness ranging from 0.05 mm to 3.0 mm. If the thickness of the upper layer 150 is less than 0.05 mm, it can be difficult to form the upper layer 150, and if the thickness of the upper layer 150 exceeds 3.0 mm, manufacturing cost of the flooring material can increase.

Next, in an exemplary embodiment shown in Fig. 7, the flooring material may further include a rear fiber layer 160 under the rear layer 110 in the structure of Fig. 6.

Here, in the flooring material according to this embodiment, the rear fiber layer 160 is placed under the rear layer 110 to improve natural feeling. The rear fiber layer 160 may be formed of at least one selected from jute, hemp, cotton, nylon, polyester fibers, and a combination thereof.

Considering improvement of natural feeling and manufacturing cost, the rear fiber layer 160 may have a thickness ranging from 0.1 mm to 2.0 mm.

Next, in an exemplary embodiment shown in Fig. 8, the flooring material may further include a bonding layer 170 between the rear layer 110 and the fiber layer 160 in the structure of Fig. 7.

Here, the bonding layer 170 is formed under the rear layer 110 to attach the rear fiber layer 160 to the lower side of the flooring material. The bonding layer 170 may be formed of one material selected from general adhesive compositions, acryl resins, urethane resins, melamine resins, epoxy resins, and polyvinyl acetate resins, which exhibit excellent adhesive strength and formability, and may have a thickness of 0.2 mm or less in terms of manufacturing costs.

Next, in an exemplary embodiment shown in Fig. 9, the flooring material may further include a rear fiber layer 160 under the rear layer 110 of Fig. 3.

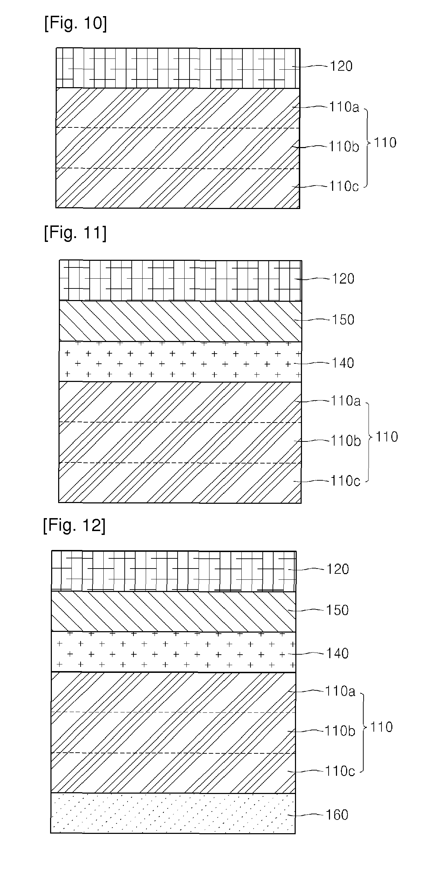

Next, in an exemplary embodiment shown in Fig. 10, which shows a portion of the structure of Fig. 3 in more detail, the rear layer 110 is composed of combination of a non-foamed layer 110a, a foamed layer 110b and a non-foamed layer 110c, which are stacked in this order from the top.

Next, in an exemplary embodiment shown in Fig. 11, the flooring material may further include an upper layer 150 and a dimension stabilizing layer 140 in this order from the top between the fabric layer 120 and the rear layer 110 in the structure of Fig. 10.

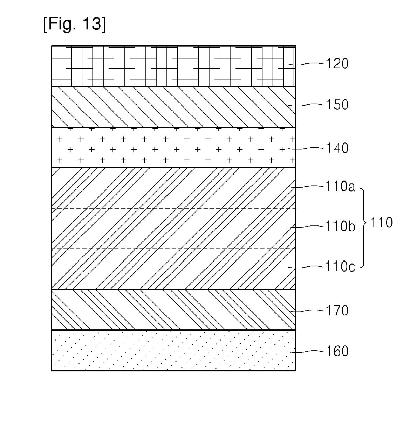

Next, in an exemplary embodiment shown in Fig. 12, the flooring material may further include a rear fiber layer 160 under the rear layer 110 in the structure of Fig. 11. Further, in an exemplary embodiment shown in Fig. 13, the flooring material may further include a bonding layer 170 between the rear layer 110 and the rear fiber layer 160 in the structure of Fig. 12.

In the present invention, any method may be employed to form the upper layer and the rear layer using the PLA resin through application of a calendering process. For example, the upper layer and the rear layer may be formed through a process of mixing and kneading raw materials including the PLA resin, and forming a desired sheet shape through calendering.

The process of mixing and kneading the raw materials may be performed, for example, by mixing and kneading liquid or powder raw materials using an extruder, a kneader, a 2- or 3-roll mill, and the like. Further, in the process of mixing and kneading the raw materials, in order to mix the raw materials more efficiently, the mixed raw materials may be repeatedly subjected to multiple stages of mixing and kneading by kneading at 120°C to 200°C using a Banbury mixer or the like, followed by primary and secondary mixing using a 2-roll mill at 120°C to 200°C.

Meanwhile, any method may be used to form a rear layer on a sheet through application of the calendering process to the mixture using, for example, a general device such as an inverse L-shaped 4-roll calender.

Further, considering the compositions of the resin, calendering conditions may be properly selected, and calendering may be carried out at a temperature ranging from about 120°C to 200°C.

As described above, the PLA flooring material having a fabric surface according to the present invention may be realized as an environmentally friendly flooring material by forming the fabric or rear layer using a plant-based PLA resin.

In addition, the PLA flooring material having a fabric surface according to the present invention may have improved outer appearance through fabrics impregnated therein, and may maximize natural feeling through the rear fiber layer formed of jute or the like.

Although the present invention has been described with reference to some exemplary embodiments in conjunction with the drawings, it should be understood that these embodiments are given by way of illustration only and do not limit the scope of the invention, and that various modifications, variations, and alterations can be made by a person having ordinary knowledge in the art without departing from the spirit and scope of the invention. Therefore, the scope of the invention should be limited only by the accompanying claims and equivalents thereof.

## Claims

1. A PLA flooring material having a fabric surface, comprising:
a fabric formed of at least one of a first fiber comprising a polylactic acid (PLA) resin, and a second fiber having a core shell structure obtained by coating a non-PLA fiber with a PLA resin.

2. The PLA flooring material of claim 1, wherein the non-PLA fiber comprises at least one selected from natural fiber, synthetic fiber, and a combination thereof.

3. The PLA flooring material of claim 2, wherein the natural fiber comprises at least one selected from among cotton, silk, hemp, and jute.

4. The PLA flooring material of claim 2, wherein the synthetic fiber comprises at least one selected from among polyvinyl chloride (PVC), polyethylene (PE), polypropylene (PP), nylon, and polyester.

5. A PLA flooring material having a fabric surface, comprising:
a fabric layer; and
a rear layer formed under the fabric layer,
at least one of the fabric layer and the rear layer comprising a PLA resin.

6. A PLA flooring material having a fabric surface, comprising:
a fabric layer;
a dimension stabilizing layer formed under the fabric layer; and
a rear layer formed under the dimension stabilizing layer,
at least one of the fabric layer and the rear layer comprising a PLA resin.

7. A PLA flooring material having a fabric surface, comprising:
a fabric layer;
an upper layer formed under the fabric layer;
a dimension stabilizing layer formed under the upper layer; and
a rear layer formed under the dimension stabilizing layer,
at least one of the fabric layer, the upper layer and the rear layer comprising a PLA resin.

8. A PLA flooring material having a fabric surface, comprising:
a protective layer;
a fabric layer formed under the protective layer;
an upper layer formed under the fabric layer;
a dimension stabilizing layer formed under the upper layer; and
a rear layer formed under the dimension stabilizing layer,
at least one of the protective layer, the fabric layer, the upper layer and the rear layer comprising a PLA resin.

9. The PLA flooring material of claim 8, further comprising: a surface treatment layer formed on the fabric layer or the protective layer.

10. The PLA flooring material of any one of claims 5 to 8, further comprising: a rear fiber layer formed under the rear layer.

11. The PLA flooring material of any one of claims 5 to 8, wherein the layer including the PLA resin further comprises a non-phthalate plasticizer.

12. The PLA flooring material of claim 11, wherein the plasticizer comprises acetyl tributyl citrate (ATBC).

13. The PLA flooring material of any one of claims 5 to 8, wherein the layer including the PLA resin further comprises at least one of an anti-hydrolysis agent and a lubricant.

14. The PLA flooring material of claim 13, wherein the anti-hydrolysis agent comprises carbodiimide or oxazoline.

15. The PLA flooring material of any one of claims 5 to 8, wherein the PLA resin comprises an amorphous PLA resin.

16. The PLA flooring material of any one of claims 5 to 8, wherein the fabric layer comprises at least one of natural fabric and synthetic resin fabric.

17. The PLA flooring material of claim 16, wherein the natural fabric comprises at least one selected from among cotton, silk, hemp, and jute.

18. The PLA flooring material of claim 16, wherein the synthetic resin fabric comprises at least one selected from among polyester, nylon, PVC, PLA, and biodegradable resins.

19. The PLA flooring material of claim 16, wherein the synthetic resin fabric comprises PLA.

20. The PLA flooring material of claim 19, wherein the PLA fabric comprises a fiber obtained by coating a thread of a different material with a PLA resin.

21. The PLA flooring material of claim 16, wherein the fabric layer is formed by twill weave or plain weave.

22. The PLA flooring material of claim 16, wherein the fabric layer is formed using threads having different colors.

23. The PLA flooring material of claim 16, wherein the fabric layer is formed by printing or dying fabrics.

24. The PLA flooring material of any one of claims 5 to 8, wherein the fabric layer comprises at least one additive selected from among 0 to 60 parts by weight of a non-phthalate plasticizer, 0.1 to 20 parts by weight of an acrylic copolymer as a melt strength enhancer, 0.01 to 10 parts by weight of a lubricant, 10 parts by weight or less of an anti-hydrolysis agent, 500 parts by weight or less of calcium carbonate (CaCO₃), and 50 parts by weight or less of titanium dioxide (TiO₂), based on 100 parts by weight of the PLA resin.

25. The PLA flooring material of any one of claims 5 to 8, wherein the fabric layer has a thickness ranging from 0.1 mm to 5.0 mm.

26. The PLA flooring material of any one of claims 5 to 8, wherein the rear layer comprises at least one selected from among 5 to 60 parts by weight of a non-phthalate plasticizer, 0.1 to 20 parts by weight of an acrylic copolymer as a melt strength enhancer, 0.01 to 10 parts by weight of at least one lubricant, 10 parts by weight or less of an anti-hydrolysis agent, 200 parts by weight or less of at least one of wood flour and chaff, 1,000 parts by weight or less of calcium carbonate, 50 parts by weight or less of titanium dioxide, and 20 parts by weight or less of pine resin, based on 100 parts by weigh of the PLA resin.

27. The PLA flooring material of any one of claims 5 to 8, wherein the rear layer has a thickness ranging from 0.2 mm to 5.0 mm.

28. The PLA flooring material of any one of claims 6 to 8, wherein the dimension stabilizing layer is formed by impregnating glass fiber (G/F) into at least one resin of an acryl resin, a melamine resin and a PLA resin.

29. The PLA flooring material of claim 28, wherein the glass fiber has a mass per unit area of 30 g/m² to 150 g/m².

30. The PLA flooring material of claim 28, wherein the dimension stabilizing layer comprises at least one selected from among 40 to 150 parts by weight of a non-phthalate plasticizer, 30 parts by weight or less of a viscosity depressant, 150 parts by weight or less of calcium carbonate, and 20 parts by weight or less of titanium dioxide (TiO₂), based on 100 parts by weight of the least one resin of the acryl resin, the melamine resin and the PLA resin.

31. The PLA flooring material of any one of claims 6 to 8, wherein the dimension stabilizing layer has a thickness ranging from 0.10 mm to 1.0 mm.

32. The PLA flooring material of claim 7 or 8, wherein the upper layer comprises at least one selected from among 5 to 60 parts by weight of a non-phthalate plasticizer, 0.1 to 20 parts by weight of an acrylic copolymer as a melt strength enhancer, and 0.01 to 10 parts by weight of a lubricant, based on 100 parts by weigh of the PLA resin.

33. The PLA flooring material of claim 7 or 8, wherein the upper layer has a thickness ranging from 0.05 mm to 3.0 mm.

34. The PLA flooring material of claim 9, wherein the surface treatment layer comprises at least one of polyurethane, urethane acrylate, and wax.

35. The PLA flooring material of claim 9, wherein the surface treatment layer has a thickness ranging from 0.01 mm to 0.1 mm.

36. The PLA flooring material of claim 10, wherein the rear fiber layer is formed of at least one kind of fiber selected from among jute, hemp, cotton, nylon, and polyester.

37. The PLA flooring material of claim 10, wherein the rear fiber layer has a thickness ranging from 0.1 mm to 2.0 mm.

38. The PLA flooring material of claim 10, wherein the rear fiber layer is bonded to a bonding layer formed under the rear layer.

39. The PLA flooring material of claim 38, wherein the bonding layer comprises one material selected from among acryl resins, urethane resins, melamine resins, epoxy resins, and polyvinyl acetate resins.

40. A PLA flooring material having a fabric surface, comprising:
a fabric layer;
an upper layer formed under the fabric layer;
a dimension stabilizing layer formed under the upper layer; and
a rear layer formed under the dimension stabilizing layer,
wherein the fabric layer comprises a PLA resin.

41. A PLA flooring material having a fabric surface, comprising:
a fabric layer;
an upper layer formed under the fabric layer;
a dimension stabilizing layer formed under the upper layer;
a rear layer formed under the dimension stabilizing layer; and
a rear fiber layer formed under the rear layer,
wherein the fabric layer comprises a PLA resin.

42. A PLA flooring material having a fabric surface, comprising:
a fabric layer;
an upper layer formed under the fabric layer;
a dimension stabilizing layer formed under the upper layer; and
a rear layer formed of a combination of a non-foamed layer, a foamed layer and a non-foamed layer sequentially stacked under the dimension stabilizing layer,
wherein the fabric layer comprises a PLA resin.

43. A PLA flooring material having a fabric surface, comprising:
a fabric layer;
an upper layer formed under the fabric layer;
a dimension stabilizing layer formed under the upper layer;
a rear layer formed of a combination of a non-foamed layer, a foamed layer and a non-foamed layer sequentially stacked under the dimension stabilizing layer; and
a rear fiber layer formed under the rear layer,
wherein the fabric layer comprises a PLA resin.

44. A PLA flooring material having a fabric surface, comprising:
a fabric layer; and
a rear layer formed of a combination of a non-foamed layer, a foamed layer and a non-foamed layer sequentially stacked under the fabric layer,
wherein the fabric layer comprises a PLA resin.

45. A PLA flooring material having a fabric surface, comprising:
a fabric layer;
a rear layer formed of a combination of a non-foamed layer, a foamed layer and a non-foamed layer sequentially stacked under the fabric layer; and
a rear fiber layer formed under the rear layer,
wherein the fabric layer comprises a PLA resin.
